(19) Europäisches Patentamt
European Patent Office
Office européen des brevets

(11) **EP 3 391 598 B1**

(12) **FASCICULE DE BREVET EUROPEEN**

(45) Date de publication et mention de la délivrance du brevet:
**17.03.2021 Bulletin 2021/11**

(21) Numéro de dépôt: **16826302.8**

(22) Date de dépôt: **19.12.2016**

(51) Int Cl.:
*H04W 28/10* <sup>(2009.01)</sup>    *H04W 28/12* <sup>(2009.01)</sup>
*H04W 40/22* <sup>(2009.01)</sup>    *H04L 12/805* <sup>(2013.01)</sup>
*H04L 12/851* <sup>(2013.01)</sup>    *H04L 12/801* <sup>(2013.01)</sup>

(86) Numéro de dépôt international:
**PCT/EP2016/081758**

(87) Numéro de publication internationale:
**WO 2017/103271 (22.06.2017 Gazette 2017/25)**

(54) **TERMINAL ET PROCÉDÉ POUR L'ÉMISSION DE DONNÉES VIA UN CANAL CONTRAINT**

ENDGERÄT UND VERFAHREN ZUR ÜBERTRAGUNG VON DATEN ÜBER EINEN BEANSPRUCHTEN KANAL

TERMINAL AND METHOD FOR TRANSMITTING DATA VIA A STRAINED CHANNEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2015 FR 1502631**

(43) Date de publication de la demande:
**24.10.2018 Bulletin 2018/43**

(73) Titulaire: **Avantix**
**13794 Aix-en-Provence (FR)**

(72) Inventeurs:
• **RICHARD, Julien**
**13011 Marseille (FR)**
• **ROMAN, Alexandre**
**83400 Hyères (FR)**

(74) Mandataire: **Cabinet Camus Lebkiri**
**25 rue de Maubeuge**
**75009 Paris (FR)**

(56) Documents cités:
WO-A1-00/41365          WO-A1-01/63856
WO-A1-2014/022492       US-B1- 7 065 575

## Description

## Domaine technique de l'invention

L'invention a pour objet un terminal et un procédé pour l'émission de données via un canal contraint. Un canal contraint est un canal dont la bande passante est limitée. En particulier le domaine de l'invention est celui de l'utilisation des canaux multiplexés dans les temps, un canal correspondant à au moins une fenêtre temporelle dans ce multiplexage.

Le domaine de l'invention est celui des dispositifs de communications, en particulier celui des dispositifs de communications devant maximiser un ratio information/bande passante.

Dans le présent texte on entend par terminal et en particulier par terminal de communications tout dispositif de traitement de données communiquant ce qui inclue, de manière non limitative, les téléphones dits intelligents, les tablettes, les ordinateurs fixes et portables. L'invention est cependant plus particulièrement destinée aux terminaux transportables tels que ceux qui sont utilisés sur les théâtres d'opération militaire.

## Etat de la technique antérieur

On connaît le document WO 00/41635 A1.

Dans l'état de la technique un terminal utilisé sur un théâtre d'opération militaire est connecté à un dispositif de relais de données, par exemple un poste PR4G pour poste radio de quatrième génération. Lorsque qu'un utilisateur du terminal souhaite émettre un message il utilise le terminal pour composer ce message. Une fois le message composé l'utilisateur le valide ce qui provoque son envoie. L'envoie du message consiste à le soumettre au dispositif relais. A partir de ce moment, pour le terminal et son utilisateur le message est « parti ».

Cependant dans la pratique le message est seulement soumis au dispositif relais. Le dispositif relais est alors chargé de l'acheminer vers son destinataire. Toujours dans la pratique il se peut que le dispositif relais soit très chargé, c'est-à-dire il se peut que le dispositif relais ait une longue file de message à traiter. Un tel cas peut se présenter, par exemple, si l'utilisateur envoie rapidement une pluralité de messages.

Du point de vue du terminal, et donc de l'utilisateur, tous les messages seront partis. Pourtant, un grand nombre de ces messages seront en fait stockés au niveau du dispositif relais en attente d'un acheminement.

L'utilisateur est donc dans une situation dans laquelle il pense que ses messages ont bien été envoyés alors qu'en fait il n'en est rien. Cette contention se produit lorsque le débit effectif du lien entre le terminal et le dispositif relais est supérieur au débit du canal alloué par le dispositif relais au terminal. Cela arrive en situation de stress et/ou de sollicitation intense pendant un combat. Il est donc possible que des messages arrivent à destination trop tardivement, voir jamais.

Pour pallier ce problème il a été mis en place, au niveau du dispositif relais, une file de messages priorisée. Dans cette file, chaque message est associé à une priorité, les messages de plus grande priorité sont envoyés avant les autres. Ainsi si un message prioritaire arrive alors que la file comporte déjà plusieurs messages non prioritaires, le message prioritaire sera envoyé avant les autres.

Cette solution résout certains problèmes mais en pose d'autre :

- Il est possible qu'un message ne parte jamais si il est de priorité trop basse : il sera toujours précédé par des messages de priorité plus élevé ;
- Il est possible que l'on revienne à la situation initiale si tous les messages ont la priorité la plus élevé. Cela arrive en situation de stress et d'urgence extrême, par exemple pendant un combat.

Il n'existe donc pas de solution satisfaisante à ce problème : permettre à un utilisateur d'un terminal connecté à dispositif relais de visualiser l'acheminement effectif des messages qu'il envoie.

## Exposé de l'invention

Dans l'invention on conditionne l'envoie d'un message à une sollicitation du dispositif relais. C'est-à-dire que le terminal n'envoie un message au dispositif relais que s'il a reçu une invitation à le faire.

Suite à la réception de cette invitation c'est le terminal qui décide quel message, ou ensemble de données, parmi un ensemble de messages, ou parmi un ensemble d'ensemble de données, il souhaite émettre. Le terminal est alors libre, dans la limite de sa programmation, d'appliquer l'algorithme qu'il souhaite pour la sélection d'un message. Mais surtout, le terminal est apte à permettre la visualisation des messages qui sont effectivement parti. En effet le terminal n'est sollicité que lorsque le dispositif relais a de la bande passante disponible ce qui garantit un acheminement immédiat du message.

A cette fin l'invention a pour objet un procédé d'émission de données suivant la revendication 1 et un dispositif suivant la revendication 7.

Le procédé/dispositif selon l'invention peut présenter une ou plusieurs caractéristiques complémentaires parmi les suivantes, considérées individuellement ou selon les combinaisons techniquement possibles:

- un message d'invitation comporte une information de capacité exprimant une quantité de données pouvant être émises durant un intervalle de temps prédéterminé à partir d'une date de réception d'un message d'invitation.
- la taille des données contenues dans le message de données peut être supérieure à l'information de capacité.

- un intervalle de temps entre un premier message d'invitation et un deuxième message d'invitation suivant dépend de la quantité des données sélectionnées.
- la sélection de données se fait parmi un ensemble d'ensemble de données, l'étape de sélection de données comportant les étapes suivantes :

    - Attribution d'un score à chaque ensemble de données ;
    - Sélection de l'ensemble de données ayant le meilleur score.

L'invention se rapporte également à un support d'enregistrement lisible par ordinateur sur lequel est enregistré un programme d'ordinateur comprenant des instructions de code de programme pour l'exécution d'étapes du procédé selon une combinaison possible des caractéristiques précédemment énoncées.

L'invention se rapporte également Dispositif mettant en œuvre le procédé selon une combinaison possible des caractéristiques précédemment énoncées.

**Brève description des figures**

D'autres caractéristiques et avantages de l'invention ressortiront à la lecture de la description qui suit, en référence aux figures annexées, qui illustrent :

- la figure 1 : une illustration d'une infrastructure permettant la mise en œuvre de l'invention ;
- la figure 2 : une illustration d'étapes du procédé selon l'invention.

Pour plus de clarté, les éléments identiques ou similaires sont repérés par des signes de référence identiques sur l'ensemble des figures.

L'invention sera mieux comprise la lecture de la description qui suit et à l'examen des figures qui l'accompagnent. Celles-ci sont présentées à titre indicatif et nullement limitatif de l'invention.

**Description détaillée d'un mode de réalisation**

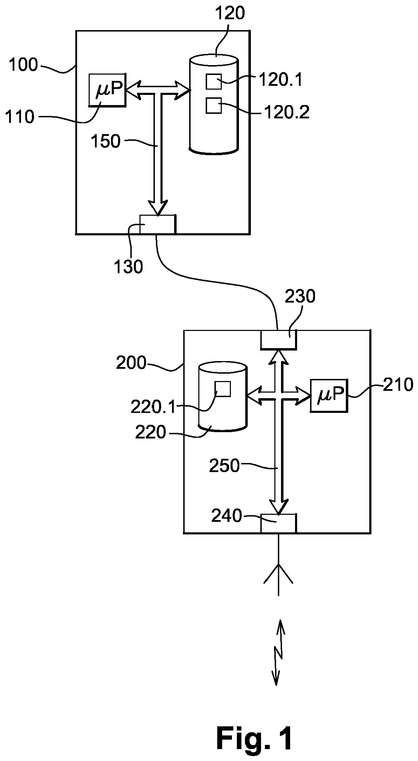

La figure 1 montre un terminal 100 destiné à la mise en œuvre de l'invention, c'est-à-dire un terminal selon l'invention. Le terminal comporte :

- un microprocesseur 110 ;
- des moyens de stockage 120, par exemple un disque dur mécanique ou non, qu'il soit simple ou en grille (par exemple RAID) ;
- une interface 130 de communication, par exemple une carte de communication selon le protocole Ethernet. D'autres protocoles sont envisageables comme IP, USB, Wifi, BlueTooth... L'interface de communication est donc avec ou sans fil.

Le microprocesseur 110 du terminal, les moyens 120 de stockage du terminal et l'interface 130 de communication du terminal sont interconnectés par un bus 150.

Lorsque l'on prête une action à un dispositif celle-ci est en fait effectuée par un microprocesseur du dispositif commandé par des codes instructions enregistrés dans une mémoire du dispositif. Si l'on prête une action à une application, celle-ci est en fait effectuée par un microprocesseur du dispositif dans une mémoire duquel des codes instructions correspondant à l'application sont enregistrés. Lorsqu'un dispositif, ou une application, émet un message, ce message est émis via une interface de communication dudit dispositif ou de la dite application. Dans ces cas, un dispositif est réel ou virtuel.

Un terminal est, par exemple et de façon non limitative :

- une tablette ;
- un téléphone intelligent ;
- un ordinateur portable ;
- un ordinateur fixe ;

La figure 1 montre un dispositif 200 relais. Le dispositif relais comporte :

- un microprocesseur 210 ;
- des moyens de stockage 220 ;
- une première interface 230 de communication compatible avec l'interface de communication 130 du terminal. Le terminal et le dispositif relais sont ainsi apte à communiquer entre eux ;
- une deuxième interface 240 de communication apte à établir une liaison avec un autre dispositif relais non représenté.

Le microprocesseur 210 du dispositif relais, les moyens 220 de stockage du dispositif relais, la première interface 230 de communication du dispositif relais et la deuxième interface 240 de communication du dispositif relais sont interconnectés par un bus 250.

Un dispositif relai est, par exemple et de façon non limitative :

- un poste radio ;
- un dispositif modem ;

Les moyens 120 de stockage du terminal comportent :

- une zone 120.1 gestion de messages comportant des codes instructions pour l'exécution du procédé selon l'invention ;
- une zone 120.2 de données structurée pour enregistrer des ensembles de données. La zone de données peut donc être vue comme un comme un ensemble d'ensemble de données. Si on assimile un ensemble de données à un message, la zone de données peut être vue comme un ensemble de messages. Dans une variante de l'invention la zone 120.2 de données permet d'associé un message à des propriétés. A un instant donné ces propriétés permettent de calculer un score pour le message Ces propriétés sont, par exemple :

- ◦ Date d'enregistrement du message ;
- ◦ Niveau de priorité du message ;
- ◦ Durée de validité du message ;
- ◦ ... la liste n'est pas exhaustive.

Les moyens de stockage du dispositif relais comportent :

- Une zone 230.1 de gestion de messages comportant des codes instruction pour la communication avec un terminal et la prise en charges de messages émis par le terminal.

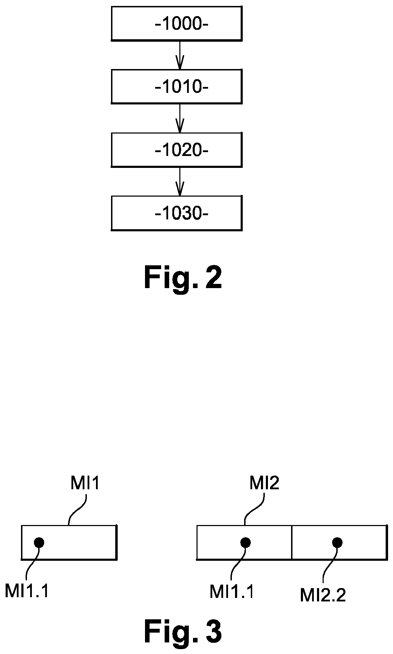

La figure 2 montre une étape 1000 dans laquelle le terminal reçoit un message MI1 d'invitation émis par le dispositif relais. Dans un mode de réalisation un tel message comporte uniquement un code MI1.1, la réception d'un tel message avec ledit code étant associée au niveau du terminal à un comportement prédéterminé. Le comportement prédéterminé est la mise en œuvre de l'invention.

Dans la pratique le dispositif relais émet des messages d'invitation selon deux critères :

- Un critère temporel, et
- Une quantité de données restant à transmettre.

Le critère temporel dépend du canal de communication alloué au terminal. Un tel canal correspond à un ensemble de fenêtres temporelles dans un cycle. Dans la pratique un cycle dure quatre seconde et un terminal est associé à une fenêtre permettant la transmission de douze octets. Dans la pratique, et avec la configuration décrite, le terminal reçoit au plus un message d'invitation toutes les quatre secondes.

Une quantité de données à transmettre peut faire augmenter cette période qui reste cependant un multiple de quatre secondes, avec la configuration décrite. En effet si le dispositif relais doit encore transmettre K octets pour le compte du terminal alors le dispositif va attendre de ne plus avoir d'octet à transmettre pour le compte du terminal avant d'émettre un nouveau message d'invitation. Cette attente correspond à la partie entière de K / 12 + 1, pour la configuration envisagée.

On est ainsi sûr que le terminal ne reçoit une invitation que lorsque le dispositif relais peut émettre pour son compte.

De l'étape 1000 de réception d'un message d'invitation le terminal passe à une étape 1010 de sélection d'un ensemble de donnés à émettre.

Dans l'étape 1010 de sélection d'un ensemble de données, le terminal parcourt la zone 120.2 de données pour sélectionner un ensemble de message. Il existe plusieurs stratégies possibles pour sélectionner un message :

- la zone de données est organisée comme une file, le premier ensemble de données enregistré et alors le premier ensemble de de données consommée. Autrement dit on sélectionne l'ensemble de données le plus ancien dans la file. Cela peut aussi être fait à partir d'une propriété date de création ;
- on sélectionne l'ensemble de données dont la propriété niveau de priorité est la plus élevée ;
- on sélectionne un ensemble de données en fonction d'une pluralité de propriété, par exemple en calculant un score avec une formule du type :

$$score = age(message) * priorité$$

le message, c'est-à-dire l'ensemble de données, ayant le meilleur score le est sélectionné ;
- ... la liste n'est pas exhaustive.

Dans la description on utilise la notion de meilleur score. Cette notion est un choix d'implémentation. Ce meilleur score est, selon la mise en œuvre de l'invention :

- Le score le plus élevé, ou
- Le score le plus faible.

Avec la formule donnée en exemple le meilleur score serait le score le plus élevé. De l'étape de de sélection le terminal passe à une étape 1020 de production d'un message, c'est-à-dire de mise en forme de l'ensemble de données sélectionné pour sa transmission au dispositif relais.

De l'étape 1020 de production d'un message le terminal passe à une étape 1030 d'envoi du message produit au dispositif relais.

A partir de l'étape 1030 l'ensemble de données sélectionné est considéré comme envoyé. De plus le terminal peut garantir à son utilisateur que la transmission au dispositif relais équivaut à un acheminement vers le destinataire.

Dans une variante de l'invention un message d'invitation comporte un champ pour enregistrer une capacité. La figure 2 montre un deuxième message MI2.2 d'invitation comportant :

- un champ MI1.1 code identique au code du premier message d'invitation ;
- un champ MI2.2 capacité comportant une capacité exprimant un le maximum pour la taille de l'ensemble de données que devrait sélectionner le terminal.

Dans cette variante le terminal peut donc utiliser cette valeur de capacité comme critère de sélection d'un message.

Par exemple si cette valeur de capacité vaut quatre cela signifie que si le terminal sélectionne un ensemble de données dont la taille est au plus 4, alors cette ensemble de données sera acheminé aussitôt.

Un tel cas se présente, par exemple, lorsqu'en réponse à un message d'invitation le terminal a envoyé 20 octets de données. Le dispositif relais a donc dans ce cas émis 12 octets immédiatement et, à la fenêtre temporelle suivante il lui restait 8 octets à mettre. Il y avait donc encore de la place pour 4 octets, ce qu'il signale au terminal par l'intermédiaire du champ capacité.

Dans la pratique un message d'invitation est envoyé suffisamment avant le début de la fenêtre temporelle devant être utilisée pour l'acheminement des données. Ce suffisamment avant permet au terminal de produire un message et au dispositif relais de recevoir le message produit. Cela est possible, entre autre, car le lien entre le terminal et le dispositif relais a un débit bien supérieur au débit d'acheminement qui est classiquement de 12 octets par seconde.

## Revendications

1.  Procédé d'émission de données par un terminal connecté à un dispositif de relais de données par un canal de données utilisant un multiplexage temporel, les données émises par le terminal étant acheminées par le dispositif relais, procédé **caractérisé en ce qu'**il comporte les étapes suivantes, mises en œuvre par le terminal :

    - Réception (1000) d'un message d'invitation à émettre des données, le message d'invitation étant émis par le dispositif relais avant une fenêtre temporelle garantissant l'acheminement immédiat des données par le dispositif relais ;
    - Sélection (1010) d'un ensemble de données à émettre ;
    - Production (1020) d'un message de données à émettre comportant les données sélectionnées ;
    - Envoi (1030) du message de données en réponse au message d'invitation.

2.  Procédé d'émission de données selon la revendication 1, **caractérisé en ce qu'**un message d'invitation comporte une information de capacité exprimant une quantité de données pouvant être émises durant un intervalle de temps prédéterminé à partir d'une date de réception d'un message d'invitation.

3.  Procédé d'émission de données selon la revendication 2 **caractérisé en ce que** la taille des données contenues dans le message de données peut être supérieure à l'information de capacité.

4.  Procédé d'émission de données selon l'une des revendications précédentes **caractérisé en ce qu'**un intervalle de temps entre un premier message d'invitation et un deuxième message d'invitation suivant dépend de la quantité des données sélectionnées.

5.  Procédé d'émission de données selon l'une des revendications précédentes **caractérisé en ce que** la sélection de données se fait parmi un ensemble d'ensemble de données, l'étape de sélection de données comportant les étapes suivantes :

    - Attribution d'un score à chaque ensemble de données ;
    - Sélection de l'ensemble de données ayant le meilleur score.

6.  Support d'enregistrement lisible par ordinateur sur lequel est enregistré un programme d'ordinateur comprenant des instructions de code de programme pour l'exécution d'étapes du procédé selon l'une des revendications 1 à 5.

7.  Dispositif comportant les moyens adaptés à la mise en œuvre de chaque étape du procédé selon l'une des revendications 1 à 5

## Patentansprüche

1.  Sendeverfahren von Daten durch ein Terminal, das durch einen Datenkanal an eine Datenrelais-Vorrichtung angeschlossen ist, der ein vorübergehendes Multiplexing verwendet, wobei die vom Terminal versandten Daten durch die genannte Relaisvorrichtung weitergeleitet werden, wobei das Verfahren **dadurch gekennzeichnet ist, dass** es die folgenden Schritte umfasst, die vom Terminal umgesetzt werden:

    - Empfang (1000) einer Einladungsnachricht zum Senden von Daten, wobei die Einladungsnachricht von der Relaisvorrichtung vor einem vorübergehenden Fenster gesendet wird, das das sofortige Weiterleiten der Daten durch die Relaisvorrichtung garantiert;
    - Auswahl (1010) einer Gruppe von zu sendenden Daten;
    - Erzeugung (1020) einer zu sendenden Datennachricht, die die ausgewählten Daten umfasst,
    - Versand (1030) der Datennachricht als Antwort auf die Einladungsnachricht.

2.  Sendeverfahren von Daten gemäß Anspruch 1, **dadurch gekennzeichnet, dass** eine Einladungsnachricht eine Kapazitätsinformation umfasst, die eine Datenmengen ausdrückt, die während eines vorbestimmten Zeitintervalls während eines Empfangsdatums einer Einladungsnachricht gesendet werden kann.

3. Sendeverfahren von Daten gemäß Anspruch 2, **dadurch gekennzeichnet, dass** die Größe der in der Datennachricht enthaltenen Daten größer sein kann als die Kapazitätsinformation.

4. Sendeverfahren von Daten gemäß einem der voranstehenden Ansprüche, **dadurch gekennzeichnet, dass** ein Zeitintervall zwischen einer ersten Einladungsnachricht und einer zweiten, nachfolgenden Einladungsnachricht von der Qualität der ausgewählten Daten abhängt.

5. Sendeverfahren von Daten gemäß einem der voranstehenden Ansprüche, **dadurch gekennzeichnet, dass** die Auswahl von Daten aus einer Gruppe einer Datengruppe erfolgt, wobei der Auswahlschritt von Daten die folgenden Schritte umfasst:

   - Zuordnung eines Scores zu jeder Datengruppe;
   - Auswahl der Datengruppe mit dem besten Score.

6. Per Computer lesbarer Speicherträger, auf dem ein Computerprogramm gespeichert ist, das Programmcode-Anweisungen für das Ausführen von Schritten des Prozesses gemäß einem der Ansprüche 1 bis 5 umfasst.

7. Vorrichtung, die die Mittel umfasst, die für die Umsetzung jedes Schritts des Verfahrens gemäß einem der Ansprüche 1 bis 5 geeignet sind.


**Claims**

1. Method for transmitting data by a terminal connected to a data relay device via a data channel using time multiplex, said transmitted by the terminal data being forwarded by the relay device, method **characterised in that** it comprises the following steps, implemented by the terminal:

   - Receiving (1000) an invitation message to transmit data, said invitation message being transmitted by the relay device before a time window guaranteeing the data immediate forwarding by the relay device;
   - Selecting (1010) a set of data to transmit;
   - Producing (1020) a data message to be transmitted, comprising the selected data;
   - Sending (1030) the data message in response to the invitation message.

2. Method for transmitting data according to claim 1, **characterised in that** an invitation message comprises a capacity information expressing a quantity of data that can be transmitted during a time interval predetermined from a date of receiving an invitation message.

3. Method for transmitting data according to claim 2 **characterised in that** the size of the data contained in the data message may be greater than the capacity information.

4. Method for transmitting data according to one of the preceding claims **characterised in that** a time interval between a first invitation message and a following second invitation message depends on the quantity of the selected data.

5. Method for transmitting data according to one of the preceding claims **characterised in that** the selection of data is done from among a set of data sets, the step of selecting data comprising the following steps:

   - Allocating a score to each data set;
   - Selecting the data set having the best score.

6. Recording support which can be read by a computer on which is recorded a computer programme including programme code instructions for the execution of steps of the method according to one of claims 1 to 5.

7. Device comprising adapted means for implementing each step of the method according to one of claims 1 to 5.

**Fig. 1**

-1000-

↓

-1010-

↓

-1020-

↓

-1030-

## Fig. 2

MI1

MI1.1

MI2

MI1.1    MI2.2

## Fig. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0041635 A1